# FASCICULE DE BREVET EUROPEEN

(11) **EP 1 004 766 B1**
(45) Date de publication et mention de la délivrance du brevet: **28.08.2002**
(21) Numéro de dépôt: 99402927.0
(22) Date de dépôt: 25.11.1999
(51) Int. Cl.: F02K 1/72

(54) **Inverseur de poussée de turboréacteur à grilles télescopiques**
Schubumkehrvorrichtung mit teleskopischen Gittern
Thrust reverser with telescopic cascades

(30) Priorité: 26.11.1998 FR 9814885
(43) Date de publication de la demande: 31.05.2000
(73) Titulaire: SNECMA MOTEURS, 75015 Paris (FR)
(72) Inventeur: Lecordix, Jean Loic, 77000 Vaux Le Penil (FR); Schreiber, Laurent Claude Jacques, 91450 Soisy sur Seine (FR)
(74) Mandataire: Berrou, Paul

(56) Documents cités:
- EP-A- 0 809 010
- FR-A- 2 588 312
- US-A- 3 500 645
- US-A- 3 581 841

## Description

La présente invention concerne un inverseur de poussée de turboréacteur à double flux. Le turboréacteur est équipé d'un conduit en arrière de la soufflante dont le but est de canaliser le flux secondaire dit froid, ce conduit est constitué d'une paroi interne qui entoure la structure du moteur proprement dite en arrière de la soufflante, et d'une paroi externe dont la partie amont vient en continuité du carter moteur qui entoure la soufflante. Cette paroi externe peut canaliser à la fois le flux secondaire et le flux primaire dans sa partie aval, et ceci en arrière de l'éjection du flux primaire, dit chaud, dans le cas de nacelle à flux mélangés ou à flux confluents par exemple, mais dans d'autres cas, la paroi externe ne canalise que le flux secondaire dans le cas de nacelles dites à flux séparés.

Une paroi peut également caréner l'extérieur du moteur, c'est à dire l'extérieur du carter qui entoure la soufflante et l'extérieur de la paroi extérieure du conduit décrit ci-dessus, ceci dans le but de minimiser la traînée de l'ensemble propulsif. Ceci est notamment le cas pour des ensembles propulsifs rapportés sur l'extérieur d'aéronef, particulièrement lorsque ces ensembles propulsifs sont attachés sous les ailes ou à l'arrière du fuselage.

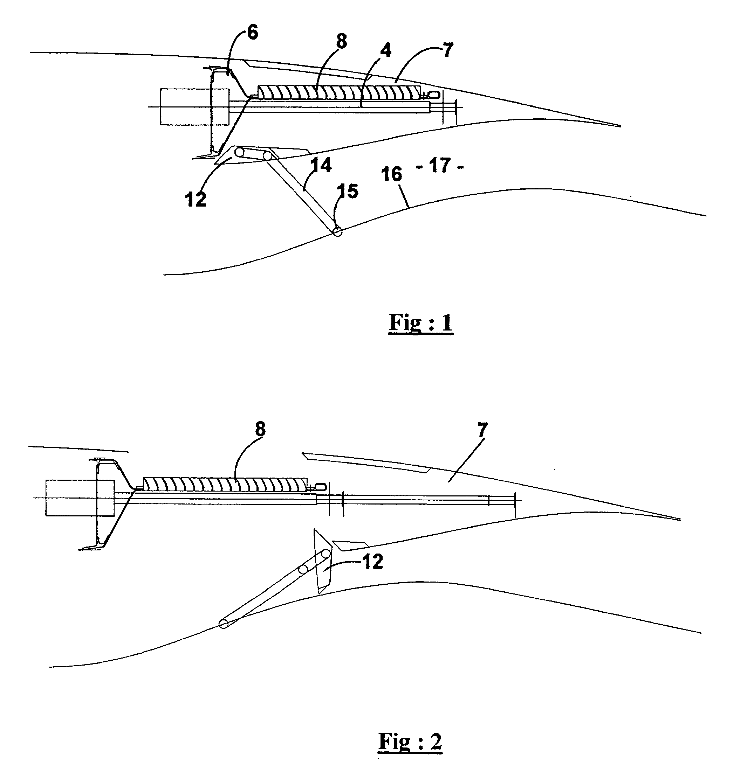

La figure 1 des dessins joints montre un exemple connu de réalisation d'un inverseur de poussée de ce type, appliqué à un turboréacteur à double flux.

Dans cet exemple d'application, un dispositif d'inversion dit à grilles dans lequel un capotage ou capot mobile 7, formant lors du fonctionnement du turboréacteur en poussée directe, tout ou une partie de l'extrémité aval de la paroi externe du canal annulaire 17 de circulation de la veine de flux secondaire, est susceptible d'être déplacé axialement en direction aval au moyen d'un système de commande comportant par exemple des vérins 4 fixés sur la partie amont 6 de l'inverseur et un déplacement du capotage 7 vers l'aval entraîne le pivotement d'une pluralité de volets 12 qui viennent obturer le canal et dévier le flux pour former un flux inversé dont le guidage est obtenu au moyen d'un dispositif à grilles 8 disposées sur la périphérie externe dudit canal et qui sont découvertes après déplacement vers l'aval dudit capotage 7, comme le montre la figure 2. Comme le montre la figure 1, en poussée directe, la paroi radialement interne des volets (12) est dans le prolongement de la paroi radialement interne du capot mobile 7.

Dans les réalisations connues d'un tel inverseur de poussée de turboréacteur, l'inverseur de poussée est constitué de deux parties, chaque partie comportant une partie demi-cylindrique dudit capotage aval 7 dont les moyens de déplacement comportent par exemple, deux vérins 4 et le pivotement desdits volets 12 est guidé par exemple par des biellettes 14 de liaison à un point fixe d'articulation 15 de biellette situé sur la paroi interne 16 dudit canal secondaire.

Des exemples de réalisation de tels inverseurs de poussée sont donnés par EP-A-0 109 219 et par US A-3 500 645. Ce type d'inverseur a l'avantage d'avoir une très bonne efficacité et permet un bon contrôle de la direction des nappes de flux éjecté.
Les dispositions connues et appliquées dans la réalisation de tels inverseurs de poussée entraînent cependant certains problèmes insuffisamment résolus. En effet, dans certaines applications, l'installation d'un inverseur à grilles soulève de grande difficultés du fait de la longueur de grilles. Cette longueur est génératrice d'une augmentation de masse et de coûts de la nacelle significatifs. Cette longueur de grille, dans certains cas, peut imposer la longueur de la nacelle du turboréacteur et de par la même créer des incompatibilité quant à l'intégration de l'ensemble propulsif à l'avion.

On connaît par ailleurs par FR 2 588 312, un inverseur de poussée où un capotage mobile est relié à un élément fixe par une pluralité de rails qui porte également une rangée annulaire d'aubes de déflecteur d'écoulement d'air. En poussée directe, les aubes sont rangées en une relation d'empilement et en inversion de poussée, les aubes sont axialement espacées par déplacement de tubes supports télescopiques. Il en résulte une complexité de construction.

Il existe un type d'inverseur à grilles dans lequel les grilles subissent le même mouvement que la partie mobile. Cela permet de ne pas tenir compte des grilles lors de la conception de la partie arrière de la nacelle. Dans ce cas c'est le cadre avant de l'inverseur qui dimensionne en hauteur la nacelle. Cependant pour intégrer ce type d'inverseur il faut avoir l'espace nécessaire pour loger les grilles lorsque l'inverseur est en position fermée. Dans de nombreuses applications cette dernière contrainte ne peut pas être respectée.

Un des buts de l'invention est de réaliser une structure évitant les inconvénients des solutions connues antérieures en conservant les avantages des grilles de déviation de flux, dans des conditions d'optimisation de la masse, du coût et des performances tout en facilitant l'installation et respectant les contraintes imposées dans certaines applications particulières.

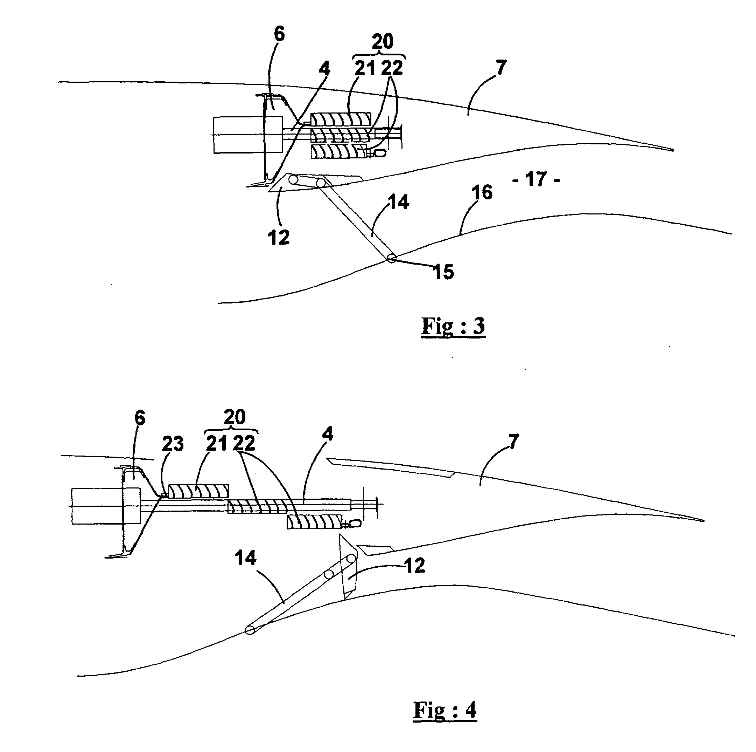

Ces buts sont atteints, conformément à l'invention, par un inverseur de poussée du type précité caractérisé en ce que sur chaque secteur périphérique, une première partie de grille est fixe et au moins une seconde partie de grille est mobile, les aubages de la seconde partie de grille sont placés en superposition radiale des aubages de la première partie de grille dans la configuration de poussée directe et dans la configuration de fonctionnement en inversion de poussée, les aubages de la seconde partie de grille après translation axiale sont juxtaposés aux aubages de la première partie de grille, dans la direction longitudinale du turboréacteur.
D'autres caractéristiques et avantages de l'invention seront mieux compris à la lecture de la description qui va suivre d'un mode de réalisation de l'invention, en référence aux dessins annexés sur lesquels :
- La figure 1 représente une demi-vue schématique, en coupe longitudinale par un plan passant par l'axe de rotation d'un turboréacteur associé, d'un inverseur de poussée à grilles, en position fermée, d'un type connu et qui a fait précédemment l'objet d'une description ;
- La figure 2 représente une demi-vue schématique en coupe, analogue à celle de la figure 1, de l'inverseur de poussée représenté sur la figure 1, dans une configuration de fonctionnement en inversion de poussée ;
- La figure 3 représente une demi-vue schématique, analogue à celle de la figure 1, d'un inverseur de poussée conforme à l'invention, en position fermée ;
- La figure 4 représente une demi-vue schématique, analogue à celle de la figure 2, de l'inverseur de poussée représenté sur la figure 3.
Selon un mode de réalisation de l'invention représenté sur les figures 3 et 4, par rapport à une réalisation connue antérieure d'un inverseur de poussée de turboréacteur du type dit à grilles tel que précédemment décrit en référence aux figures 1 et 2, le capot aval 7 mobile est conservé, associé aux vérins 4 de déplacement fixés sur la partie fixe amont 6 de l'inverseur.
De la même manière connue, une pluralité de volets 12 guidés par des biellettes 14 de pivotement assurent l'arrêt du flux lors de l'inversion de poussée.
De manière remarquable et conforme à l'invention, sur chaque secteur périphérique, une grille d'aubages 20 de déviation et guidage des nappes du flux inversé est constituée d'au moins deux parties, une première partie 21 de grille et une seconde partie 22 de grille. La première partie 21 de grille reste fixe et conserve la même position en fonctionnement de poussée directe et en fonctionnement d'inversion,de poussée. Le bord amont 23 de la première partie fixe 21 e grille est solidarisé avec la partie fixe amont 6 de l'inverseur. Dans l'exemple de réalisation représenté sur les figures 3 et 4 les secondes parties 22 de grille sont au nombre de deux et ce nombre peut varier en fonction des applications particulières. Dans la configuration de poussée directe, les secondes parties 22 de grille sont placées en superposition radiale au-dessous de la première partie fixe 21 de grille.

En variante, la seconde partie de grille peut être placée en superposition radiale au-dessus de la première partie de grille.
Lorsque l'inverseur de poussée se déploie pour prendre la configuration d'inversion de poussée, le moyen de commande des déplacements du capot aval mobile 7, constitué dans l'exemple de réalisation représenté sur les figures 3 et 4 par le vérin 4, entraîne les secondes parties 22 de grille en translation axiale vers l'aval. Une seconde partie 22 de grille vient se placer en juxtaposition dans le sens longitudinal du turboréacteur auprès de la première grille 21, chacune conservant sa position précédente en hauteur radiale. Dans le cas de plusieurs secondes parties 22 de grilles, comme pour les deux parties 22 représentées dans l'exemple de la figure 4, elles se juxtaposent l'une à la suite de l'autre de manière à couvrir la surface du puits d'inversion créé entre le capot aval 7 et la partie fixe amont 6 d'inverseur pour le passage du flux dévié et inversé.

En fonction des applications particulières, divers aménagements peuvent être apportés aux grilles. Notamment, des zones comportant des grilles d'aubages peuvent sur chaque partie être combinées avec des zones ouvertes dépourvues d'aubages et/ou avec des zones obstruantes.

## Revendications

1. Inverseur de poussée de turboréacteur à double flux comportant un capot mobile (7) formant lors du fonctionnement du turboréacteur en poussée directe l'extrémité aval de la paroi externe du canal annulaire (17) de circulation de la veine de flux qui est complétée par un ensemble de volets (12) formant un ensemble annulaire, la paroi interne des volets (12) étant dans le prolongement de la paroi radialement interne du capot mobile (7), ledit capot mobile (7) recouvrant en poussée directe un ensemble annulaire de grilles d'aubages (20) portées par la structure fixe de l'inverseur et lors du fonctionnement en inversion de poussée, sous l'action de vérins (4) fixés sur la structure fixe amont (6), ledit capot mobile (7) se déplace en translation vers l'aval, entraînant les volets (12) pivotant autour d'un point fixe d'articulation (15) solidaire de la paroi interne (16) du canal annulaire (17), par l'intermédiaire de biellettes (14), de manière à obturer ledit canal (17) et dévier le flux qui est éjecté à travers les grilles (20) en procurant une inversion de poussée **caractérisé en ce que** sur chaque secteur périphérique, une première partie (21) de grille est fixe et au moins une seconde partie (22) de grille est mobile les aubages de la seconde partie (22) de grille sont placés en superposition radiale des aubages de la première partie (21) de grille dans la configuration de poussée directe et dans la configuration de fonctionnement en inversion de poussée, les aubages de la seconde partie (22) de grille après translation axiale sont juxtaposés aux aubages de la première partie (21) de grille, dans la direction longitudinale du turboréacteur.

2. Inverseur de poussée de turboréacteur à double flux selon la revendication 1 **caractérisé en ce que** le déplacement des secondes parties (22) de grille est effectué sous l'action des vérins (4) de déplacement du capot mobile (7)

3. Inverseur de poussée de turboréacteur à double flux selon l'une des revendications 1 ou 2 **caractérisé en ce que** les aubages de la seconde partie (22) de grille sont placés en superposition radiale au-dessous des aubages de la première partie (21) de grille dans la configuration de poussée directe.

4. Inverseur de poussée de turboréacteur à double flux selon la revendication 1 **caractérisé en ce que** les aubages de la seconde partie (22) de grille sont placés en superposition radiale au-dessus des aubages de la première partie (21) de grille dans la configuration de poussée directe.

## Patentansprüche

1. Schubumkehrvorrichtung für ein Zweikreis-TL-Triebwerk, bestehend aus einer beweglichen Haube (7), die bei Direktschubbetrieb des Turbotriebwerks das hintere Ende der Außenwand des Ringkanals (17) der Strömungsbahn bildet, die von einer Anordnung von Klappen (12) vervollständigt wird, die eine ringförmige Gesamtanordnung bildet, wobei die Beschaufelungen dieser beweglichen Haube (7) im Direktschubbetrieb eine ringförmige Gesamtanordnung von Beschaufelungsgittern (20) abdecken, die an dem festen Aufbau der Schubumkehrvorrichtung sitzen, und wobei sich diese bewegliche Haube (7) im Schubumkehrbetrieb unter Einwirkung von Zylindern (4), die an dem vorderen festen Aufbau (6) sitzen, in einer Vorschubbewegung nach hinten verschiebt und dabei die Klappen (12) mitnimmt, die vermittels Stangen (14) um einen feststehenden Drehpunkt (15) schwenken, der mit der Innenwand (16) des Ringkanals (17) fest verbunden ist, so dass dieser Kanal (17) verschlossen wird und der Strom, der durch die Gitter (20) ausgestoßen wird, umgelenkt wird, wobei eine Schubumkehr erzeugt wird,
**dadurch gekennzeichnet,**
**dass** an jedem Umfangssektor ein erster Gitterteil (21) feststehend und mindestens ein zweiter Gitterteil (22) beweglich angebracht ist, dass die Beschaufelungen des zweiten Gitterteils (22) in der Direktschubkonfiguration radial über den Beschaufelungen des ersten Gitterteils (21) angeordnet sind und in der Schubumkehrkonfiguration die Beschaufelungen des zweiten Gitterteils (22) nach der axialen Verschiebung in Längsrichtung des Turbotriebwerks an die Beschaufelungen des ersten Gitterteils (21) angrenzen.

2. Schubumkehrvorrichtung für ein Zweikreis-TL-Triebwerk nach Anspruch 1,
**dadurch gekennzeichnet,**
**dass** die Verschiebung des zweiten Gitterteils (22) unter Einwirkung der Zylinder (4) zum Verschieben der beweglichen Haube (7) erfolgt.

3. Schubumkehrvorrichtung für ein Zweikreis-TL-Triebwerk nach Anspruch 1 oder 2,
**dadurch gekennzeichnet,**
**dass** die Beschaufelungen des zweiten Gitterteils (22) in der Direktschubkonfiguration radial unter den Beschaufelungen des ersten Gitterteils (21) angeordnet sind.

4. Schubumkehrvorrichtung für ein Zweikreis-TL-Triebwerk nach Anspruch 1,
**dadurch gekennzeichnet,**
**dass** die Beschaufelungen des zweiten Gitterteils (22) in der Direktschubkonfiguration radial über den Beschaufelungen des ersten Gitterteils (21) angeordnet sind.

## Claims

1. Bypass turbojet thrust reverser comprising a moving cover (7) which, when the turbojet is operating in direct thrust mode, forms the downstream end of the external wall of the annular duct (17) in which the stream flows and which is supplemented by a set of flaps (12) forming an annular assembly, the internal wall of the flaps (12) being in the continuation of the radially internal wall of the moving cover (7), the said moving cover (7) covering, in direct thrust mode, an annular assembly of cascades of vanes (20) carried by the fixed structure of the reverser and during operation in reverse thrust mode, under the action of rams (4) fixed to the upstream fixed structure (6), the said moving cover (7) moves in translation downstream, driving the flaps (12) pivoting about a fixed pivot point (15) secured to the internal wall (16) of the annular duct (7), via link rods (14), so as to shut off the said duct (17) and deflect the stream which is ejected through the cascades (20) reversing the thrust, **characterized in that**, on each peripheral sector, a first cascade part (21) is fixed and at least one second cascade part (22) is able to move, the vanes of the second cascade part (22) are placed in radial superposition with the vanes of the first cascade part (21) in the direct thrust configuration and in the reverse thrust operating configuration, the vanes of the second cascade part (22) following axial translation are juxtaposed with the vanes of the first cascade part (21) in the longitudinal direction of the turbojet.

2. Bypass turbojet thrust reverser according to Claim 1, **characterized in that** the movement of the second cascade parts (22) is performed under the action of the rams (4) that move the moving cover (7).

3. Bypass turbojet thrust reverser according to one of Claims 1 or 2, **characterized in that** the vanes of the second cascade part (22) are placed in radial superposition under the vanes of the first cascade part (21) in the direct thrust configuration.

4. Bypass turbojet thrust reverser according to Claim 1, **characterized in that** the vanes of the second cascade part (22) are placed in radial superposition above the vanes of the first cascade part (21) in the direct thrust configuration.
